# EUROPEAN PATENT SPECIFICATION

(11) **EP 1 448 028 B1**
(45) Date of publication and mention of the grant of the patent: **07.03.2007**
(21) Application number: 02775437.3
(22) Date of filing: 30.10.2002
(51) Int. Cl.: H05B 41/24, H05B 41/292

(54) **DISCHARGE LAMP OPERATING APPARATUS**
ENTLADELAMPENBETRIEBSVORRICHTUNG
APPAREIL FONCTIONNANT AVEC UNE LAMPE A DECHARGE

(30) Priority: 30.10.2001 JP 2001332259
(43) Date of publication of application: 18.08.2004
(73) Proprietor: MITSUBISHI DENKI KABUSHIKI KAISHA, Chiyoda-ku Tokyo 100-8310 (JP)
(72) Inventor: OHKURA, Susumu, Mitsubishi Denki Kabushiki Kaisha, Tokyo 100-8310 (JP)
(74) Representative: HOFFMANN EITLE
(86) International application number: PCT/JP2002/011298
(87) International publication number: WO 2003/039208

(56) References cited:
- EP-A- 0 955 793
- JP-A- 8 098 552
- JP-A- 11 003 789
- JP-A- 11 263 240
- US-A- 6 034 490
- PATENT ABSTRACTS OF JAPAN vol. 1995, no. 03, 28 April 1995 (1995-04-28) -& JP 06 348350 A (MATSUSHITA ELECTRIC WORKS LTD), 22 December 1994 (1994-12-22)

## Description

### TECHNICAL FIELD

The present invention relates to a discharge lamp used for headlights of motor vehicles, for luminaries of indoor/outdoor facilities, warehouses and factories or for streetlights, and more particularly to a discharge lamp lighting apparatus of a high-intensity discharge lamp (HID). An apparatus of this kind is known from US 6,034,490.

### BACKGROUND ART

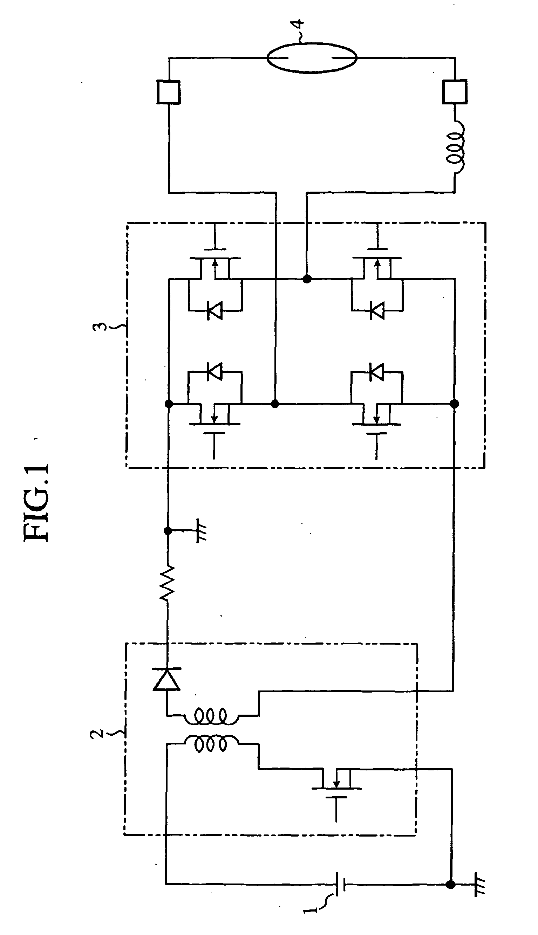

Conventionally, a vehicle-mounted discharge lamp lighting apparatus as shown in Fig. 1 has been known.

The discharge lamp lighting apparatus, which employs a vehicle-mounted battery 1 as its power supply, comprises a DC/DC converter 2 for boosting the voltage of the battery, and an inverter circuit 3 including four switching devices connected in an H-like bridge. The inverter circuit 3 converts the voltage boosted by the DC/DC converter 2 to an alternating voltage, and lights up a discharge lamp 4 by supplying the power.

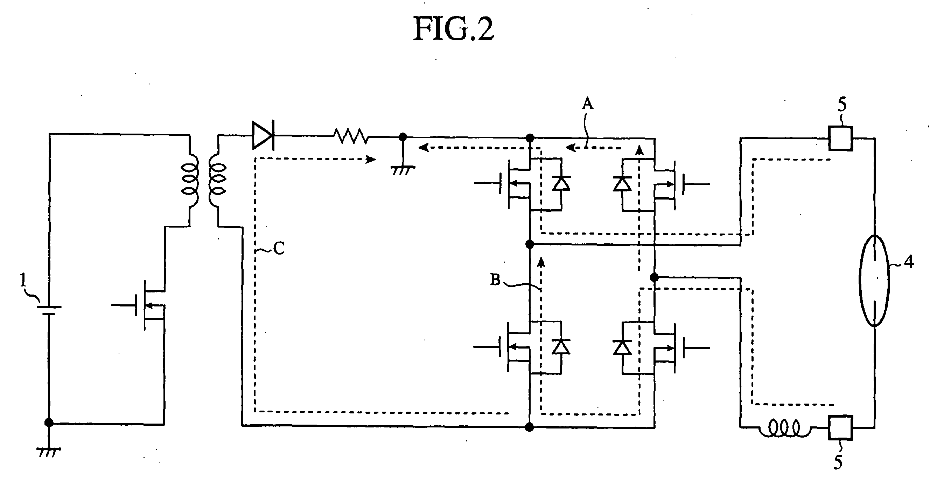

In the conventional example, if one of output terminals 5 of the discharge lamp lighting apparatus (terminals of the discharge lamp 4) is short circuited to a supply voltage side (called "battery side short-circuit" from now on), currents will flow through paths indicated by dotted-line arrows in Fig. 2. Because of parasitic diodes, the current through the upper path (A) flows independently of the ON/OFF state of the two upper FETs (Field Effect Transistors) . In contrast, currents through lower paths (B) and (C) flow only when the lower FETs are in the ON state.

Other conventional examples are disclosed in Japanese patent application laid-open Nos. 11-67483/1999 and 11-329767/1999. The former example protects the lighting apparatus when its output terminal is short circuited to the ground, and the latter example turns off the inverter circuit in its entirety when it detects a ground side short.

However, the conventional examples have a problem in that when a battery side short-circuit takes place, a circuit component such as the H-bridge circuit can be damaged. The damage can be caused by a battery side short-circuit current, which flows from a battery side short-circuit position to a GND (ground: although it is usually established to a potential zero point such as the earth, a pseudo-ground is established to the body of a vehicle).

From Patent Abstract of Japan, vol. 1995 no. 3, 28 April 1995 corresponding to JP 06348350 A a protecting circuit 3 with a switch element inserted between a DC power supply and a main circuit is known. A comparator controls the switching element based on the voltage across the switch element, such that currents passing through the switch element in the reverse direction can be prevented.

Therefore an object of the present invention is to provide a discharge lamp lighting apparatus capable of preventing a failure of the apparatus due to the battery side short-circuit.

This object is solved in accordance with the present invention as defined in claim 1. Advantageous embodiments of the present invention are given in the dependent claims.

### DISCLOSURE OF THE INVENTION

According to a first aspect of the present invention, there is provided a discharge lamp lighting apparatus including a DC power supply; a boosting circuit for boosting a DC fed from the DC power supply; an inverter circuit for inverting the DC boosted by the booster to an AC; and a ground terminal, and characterized by comprising reverse current protection means interposed between the inverter circuit and the ground terminal. Thus, it can prevent the failure of the components within the inverter circuit at the battery side short-circuit.

Here, the reverse current protection means can consist of a reverse current protection diode, such that it can prevent the reverse current with a simple configuration.

In addition, it may include a battery side short-circuit detector for detecting the battery side short-circuit by the cathode voltage of the reverse current protection diode, such that it can detect the battery side short-circuit positively.

Furthermore, it may include a capacitor for absorbing the surge voltage occurring at the reverse current protection diode, such that it can prevent the control circuit such as the control IC from being damaged by the battery side short-circuit.

Besides, it may include a surge clamping circuit against the surge voltage occurring at the reverse current protection diode, such that it can prevent the control circuit such as the control IC from being damaged by the battery side short-circuit.

Moreover, it may preferably turn off the FETs in the inverter circuit at the battery side short-circuit, such that it can prevent the battery side short-circuit current from flowing from the opposite side of the reverse current protection diode.

In addition, it may include a constant current circuit connected in parallel with the reverse current protection diode, and turn off the constant current circuit in response to the detection of the battery side short-circuit, such that it can prevent the control circuit such as the control IC from being damaged by the battery side short-circuit.

Furthermore, it may include a Zener diode connected in parallel with the reverse current protection diode, such that it can prevent the control circuit such as the control IC from being damaged by the battery side short-circuit.

Preferably, the reverse current protection means is a FET between the inverter circuit and the ground terminal. Thus, it can prevent a failure of the components within the inverter circuit at the battery side short-circuit.

Here, it may include a reverse current protection diode in the power supply line to the control circuit for controlling the reverse current protection FET, such that it can prevent the control circuit such as the control IC from being damaged by the battery side short-circuit.

In addition, it may disconnect the reference potential of the control circuit of the inverter circuit from the ground potential of the other circuit, such that it can prevent the control circuit such as the control IC from being damaged by the battery side short-circuit.

Finally, it may turn off only the FETs on the current path from the battery side short-circuit position to the ground in the inverter circuit, such that it can prevent the control circuit such as the control IC from being damaged by the battery side short-circuit.

### BRIEF DESCRIPTION OF THE DRAWINGS

Fig. 1 is a circuit diagram showing a conventional discharge lamp lighting apparatus;
Fig. 2 is a circuit diagram showing currents due to a battery side short-circuit in the conventional discharge lamp lighting apparatus;
Fig. 3 is a circuit diagram showing a discharge lamp lighting apparatus of an embodiment 1 in accordance with the present invention;
Fig. 4 is a circuit diagram showing a discharge lamp lighting apparatus of an embodiment 2 in accordance with the present invention;
Fig. 5 is a circuit diagram showing a cathode voltage detecting interface circuit;
Fig. 6 is a circuit diagram showing placement of surge absorbing capacitors in an embodiment 3 in accordance with the present invention;
Fig. 7 is a circuit diagram showing an IC driver circuit;
Fig. 8 is a circuit diagram showing a discharge lamp lighting apparatus of an embodiment 4 in accordance with the present invention;
Fig. 9 is a circuit diagram showing a discharge lamp lighting apparatus of an embodiment 6 in accordance with the present invention;
Fig. 10 is a circuit diagram showing a discharge lamp lighting apparatus of an embodiment 7 in accordance with the present invention;
Fig. 11 is a circuit diagram showing a driver circuit in an embodiment 8 in accordance with the present invention;
Fig. 12 is a circuit diagram showing placement of a reverse current protection diode in the embodiment 8 in accordance with the present invention;
Fig. 13 is a circuit diagram showing a current supply to a power supply line by a driver circuit at a battery side short-circuit in the embodiment 8 in accordance with the present invention;
Fig. 14 is a circuit diagram showing a constant current circuit in an embodiment 9 in accordance with the present invention;

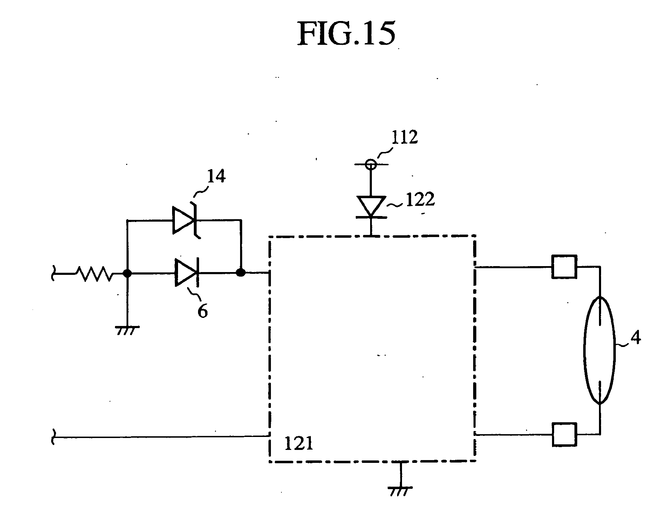

Fig. 15 is a circuit diagram showing a constant current circuit in an embodiment 10 in accordance with the present invention;
Fig. 16 is a circuit diagram showing a discharge lamp lighting apparatus of an embodiment 11 in accordance with the present invention;
Fig. 17 is a circuit diagram showing placement in a vehicle of the discharge lamp lighting apparatuses of the embodiment 11 in accordance with the present invention; and
Fig. 18 is a flowchart illustrating start/stop control of an inverter circuit.

### BEST MODE FOR CARRYING OUT THE INVENTION

The best mode for carrying out the invention will now be described with reference to the accompanying drawings to explain the present invention in more detail.

### EMBODIMENT 1

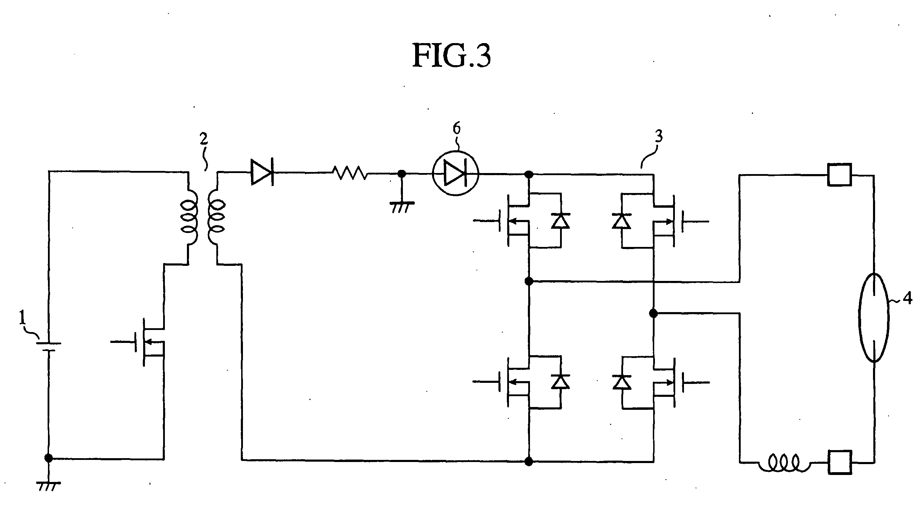

Fig. 3 is a circuit diagram showing a configuration of the present embodiment.

In Fig. 3, the discharge lamp lighting apparatus, which employs a vehicle-mountedbattery 1 as its power supply, comprises a DC/DC converter 2 for boosting the voltage of the battery 1, and an inverter circuit 3 including four switching devices connected in an H-like bridge. The inverter circuit 3 converts the voltage boosted by the DC/DC converter 2 to an alternating voltage, and lights up a discharge lamp 4 by supplying the power.

To shut off the battery side short-circuit current indicated by the path (A) in the conventional example of Fig. 2, a reverse current protection diode 6 is inserted. Since a forward current flows through the diode 6 during normal lighting, a diode (Schottky barrier diode) with a small forward voltage Vf is used. Because a considerable amount of current (0.4 A, for example) flows through the diode 6 during the normal lighting, a large forward voltage Vf will increase a loss and heating value, thereby bringing about disadvantages correspondingly.

During the switching of the inverter circuit 3, all the four FETs can be interrupted instantaneously, at which instance the current is broken and a surge voltage is generated at the cathode side of the diode 6. Therefore the withstand voltage of the diode 6 must be of an order that can resist the surge voltage.

### EMBODIMENT 2

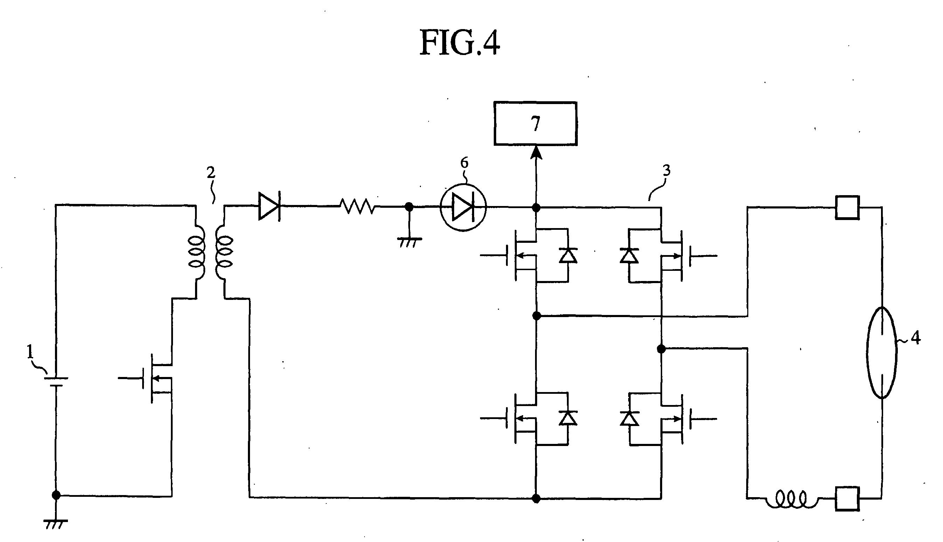

In the foregoing embodiment 1, the reverse current protection diode 6 is inserted. In the present embodiment 2 as shown in Fig. 4, if a battery side short-circuit occurs at the output terminals (both terminals of the discharge lamp) of the discharge lamp lighting apparatus, the cathode voltage of the reverse current protection diode 6 becomes equal to the battery side short-circuit voltage (actually, it drops by an amount of the forward voltage Vf of the parasitic diode of the FET of the inverter circuit 3). Thus, the battery side short-circuit can be detected by a circuit for monitoring the voltage (cathode voltage detector 7).

Incidentally, since the forward current flows through the diode 6 during the normal lighting, the cathode voltage becomes negative, thereby being able to prevent error detection of the battery side short-circuit.

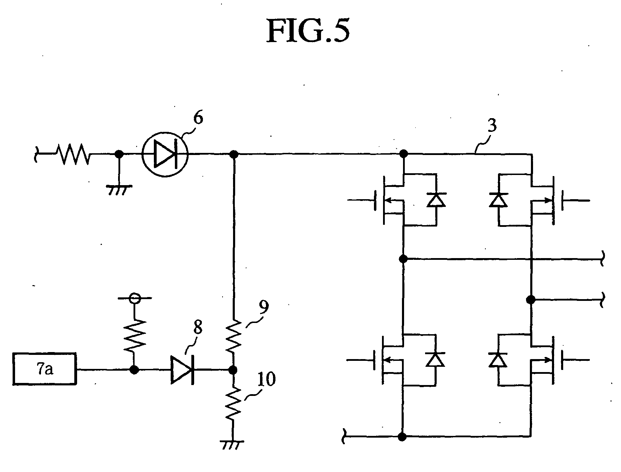

Fig. 5 shows an example of the cathode voltage detector configured by a microcomputer. To prevent a damage of a microcomputer 7a in the configuration when it is inactive or when the battery side short-circuit voltage is high, the cathode voltage detecting interface circuit includes a reverse current protection diode 8 inserted thereto.

The diode 8 serves to protect the microcomputer 7a from the surge voltage at the switching of the inverter circuit during the normal lighting as described in the foregoing embodiment 1. In addition, even if the cathode voltage of the diode 6 becomes negative voltage, the diode 8 prevents the input to the microcomputer 7a from becoming a negative voltage because of the forward voltage Vf of the diode 8. This is because the voltage dividing resistors makes the voltage at the midpoint of the voltage divider higher than the cathode voltage of the diode 6, and the forward voltage Vf of the diode 8 is added to the midpoint voltage of the voltage divider.

To detect the battery side short-circuit, since it is enough to detect that the cathode voltage of the diode 6 is greater than a specified voltage, it is not necessary to set the upper limit of a voltage range detectable. Thus, it is enough to decide the rated power of the resistors 9 and 10 of the interface circuit of Fig. 5 such that the withstand voltage is sufficiently ensured when the maximum value of the cathode voltage (that is, the maximum value of the battery voltage) is applied. In addition, as for the impedances of the voltage dividing resistors, they must be increased to such values that the current flowing from the ground of the interface circuit to the cathode of the diode 6 is negligibly smaller than the current flowing to the discharge lamp when the cathode of the lamp diode 6 is placed at a negative voltage.

Even if the voltage at the midpoint of the voltage divider is greater than the power supply voltage (5V) of the microcomputer 7a when the maximum value of the battery voltage is applied, the microcomputer 7a is protected by the diode 8. Accordingly, it is not necessary for the voltage-dividing ratio of the resistors to cover the entire input range to the microcomputer 7a.

### EMBODIMENT 3

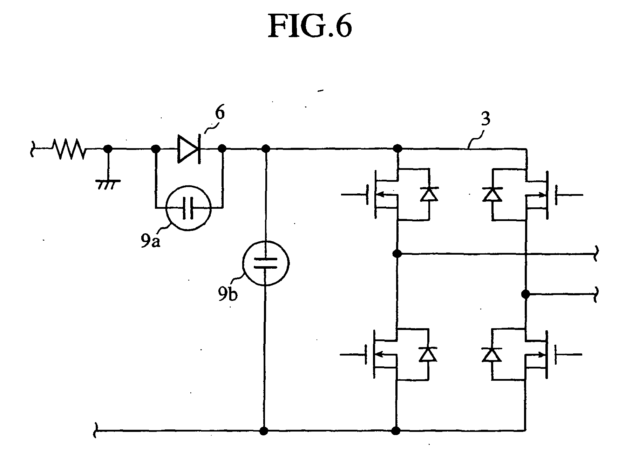

As described in the foregoing embodiment 1, a surge voltage is applied to the cathode of the diode 6 during the normal lighting. To absorb the surge, the present embodiment 3 comprises a capacitor 9a or 9b as shown in Fig. 6.

This negates the need for considering the withstand voltage against the surge voltage of the diode 6, thereby enabling the diode 6 to use a diode with a low withstand voltage. Reducing the withstand voltage can also reduce the forward voltage Vf, which offers an advantage of reducing the loss and heating value during lighting.

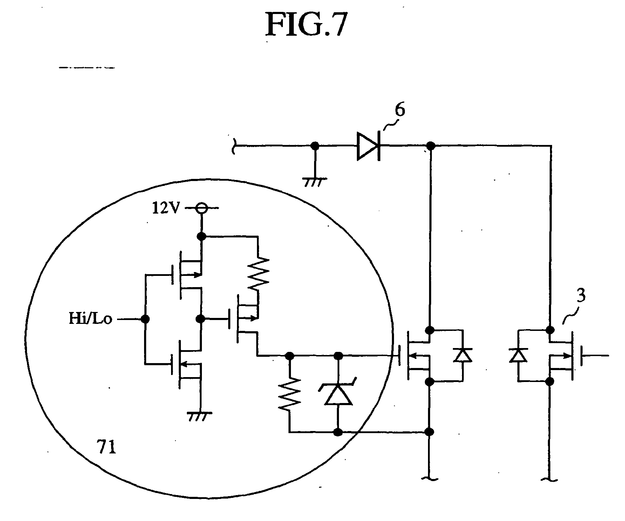

The reduction of the surge voltage by adding the capacitor 9a or 9b as shown in Fig. 6 can solve the following problems involved in using a module IC including a driver circuit 71 as shown in Fig. 7 as the inverter circuit 3 as shown in Fig. 3 with using the driver circuit 71 for driving the FETs in the inverter circuit 3:
1) Damaging the driver circuit when the surge exceeds the withstand voltage of the module IC at the switching of the inverter circuit; and
2) Disabling the FETs to turn on because of insufficient gate-source voltages Vgs due to an increase in the surge voltage. Even if the surge does not exceed the withstand voltage of the module IC, when the left side FET in Fig. 7 is switched on, a high surge voltage at the cathode of the diode 6 (the drain voltage of the FET) increases the source voltage of the FET. This is because the source is coupled to the drain of the FET through the drain-source stray capacitance. Consequently, although the driver circuit supplies the gate of the FET with the normal voltage (12 V, here), only insufficient Vgs is obtained, thereby being unable to turn on the FET.

Since these problems can be solved, the IC module as shown in Fig. 7 can be used.

### EMBODIMENT 4

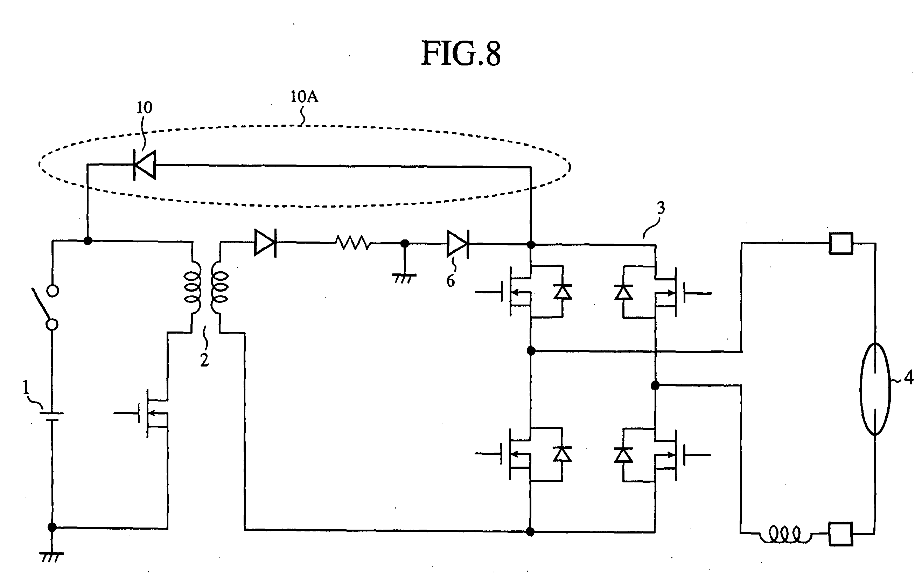

As described in the foregoing embodiments, if a battery side short-circuit takes place in the circuit including the additional diode 6 during the lighting of the discharge lamp, a surge voltage is produced at the cathode of the diode 6 at the instant of the switching of the inverter circuit. Since the surge voltage is greater than that taking place during the normal lighting, a large capacitor 9a or 9b is required to absorb the surge voltage by the capacitor 9a or 9b of the foregoing embodiment 3 . In view of this, it is preferable to install a surge clamping circuit 10A as shown in Fig. 8 for suppressing the surge to protect the module IC as shown in Fig. 7 from the battery side short-circuit during lighting.

The surge clamping circuit 10A can bypass the surge to the power supply side via a diode 10 when the cathode voltage of the reverse current protection diode 6 exceeds the battery voltage. Thus, the module IC becomes free from the excessive surge voltage, and is protected. Since the cathode voltage of the diode 6 is nearly equal to the battery voltage at the battery side short-circuit, a forward current does not flow through the diode 10 except when it bypasses the surge. Besides, since the reverse current from the power supply to the diode 6 through the diode 10 does not occur during the normal lighting, the additional diode 10 has no adverse effect on the normal operation.

### EMBODIMENT 5

Instead of providing the surge clamping circuit 10A described in the foregoing embodiment 4, it is also possible to increase the capacitance of the capacitor described in the foregoing embodiment 3 to such a value that it can absorb the surge voltage produced at the cathode of the diode 6 at the instant of the switching of the inverter circuit in the event of the battery side short-circuit during the lighting.

### EMBODIMENT 6

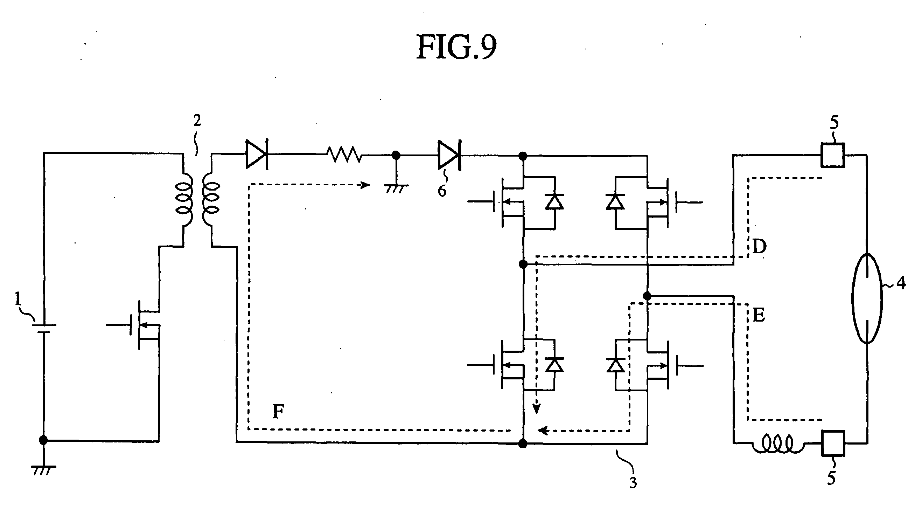

The foregoing embodiment 1, which includes the reverse current protection diode 6, has a problem in that when the battery side short-circuit occurs at the output terminals 5 of the discharge lamp lighting apparatus, and if the lower FET of the inverter circuit is in the on state, a current can continue to flow through the paths indicated by dotted-line arrows D, E and F in Fig. 9 from the battery side short-circuit position after the DC/DC converter 2 halts its operation. In view of this, the present embodiment 6 turns off all the FETs of the inverter circuit 3 to shut off the currents.

In this case, the current through the parasitic diode of the lower FET of the inverter circuit 3 is also shut off.

In a discharge standby state (at an initial start, for example), in which the discharge lamp is not lighted, the current from the battery side short-circuit position can be shut off by bringing all the FETs of the inverter circuit 3 out of conduction.

If the inverter circuit is being switched off in its entirety when the DC/DC converter is activated (started) in the case where no battery side short-circuit is taking place, an excessive current will flow at the instant when the FETs to be conducted at the start are turned on. The program can be handled by turning the inverter circuit on before starting the DC/DC converter.

On the other hand, to halt the DC/DC converter, it is preferable that the DC/DC converter be stopped before turning off the entire inverter circuit. This is achieved by placing the DC/DC converter in a disabled state as long as the inverter circuit is in the off state in its entirety.

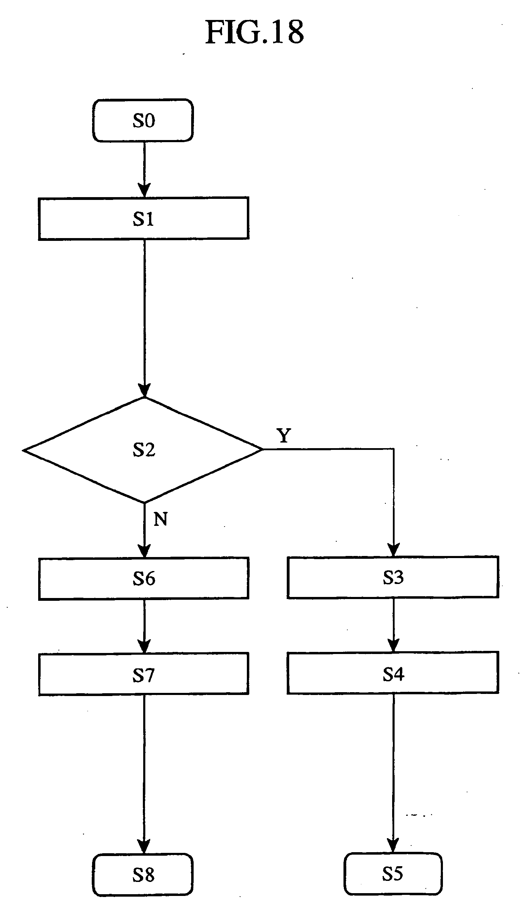

This will be described in more detail with reference to Fig. 18 illustrating the start/stop control of the inverter circuit. The control starts at step S0, and turns off the inverter in its entirety at step S1. Subsequently, the control checks whether a battery side short-circuit occurs or not at step S2. If it occurs, the control proceed to step S3 and stops the DC/DC converter, followed by stopping the inverter in its entirety at step S4. Thus, the stop control is completed at step S5.

On the other hand, if the control makes a decision that the battery side short-circuit does not occur, it proceeds to step S6 and turns on the starting side of the inverter. Subsequently, the control starts the DC/DC converter at step S7. Thus, the start control is completed at step S8.

### EMBODIMENT 7

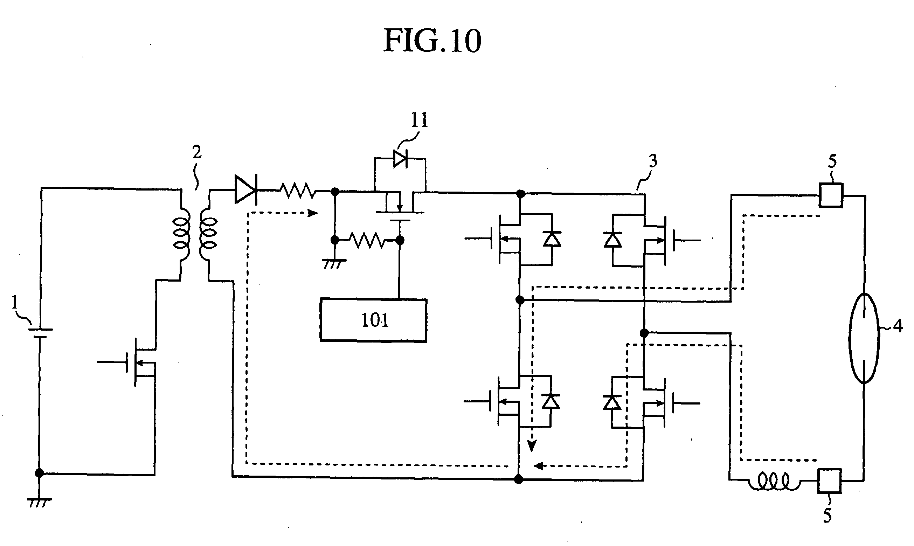

The present embodiment 7 uses a reverse current protection FET 11 as shown in Fig. 10 inplace of the reverse current protection diode 6 described in the foregoing embodiment 1 to prevent the current from continuing to flow from the battery side short-circuit position to the ground, in the event that the battery side short-circuit occurs at one of the output terminals 5 of the lighting apparatus when the discharge lamp is out of lighting. The configuration makes it possible to detect the battery side short-circuit while the DC/DC converter 2 is in an inactive state. The reference numeral 101 is a driving circuit of the FET 11.

Using the FET 11 in this way can prevent the surge, which occurs at the switching of the inverter circuit 3 when the diode 6 is used, by placing the FET 11 in the conduction state while lighting, thereby being able to circumvent the adverse effect on the module IC. In other words, the surge absorbing capacitor or surge clamping circuit becomes unnecessary.

In contrast, although the battery side short-circuit can be detected from the cathode voltage when the diode 6 is used, its detection is difficult in the present embodiment 7 that uses the FET 11. This is because since the drain voltage of the FET 11 corresponding to the cathode voltage is very low (given by current × on-state resistance) during the normal lighting while the FET 11 is in the conduction state, the voltage fluctuates which is detected by the ratio between the impedance from the battery side short-circuit position to the ground and the on-state resistance. Thus, it is difficult for the present embodiment 7 to detect the battery side short-circuit during lighting.

### EMBODIMENT 8

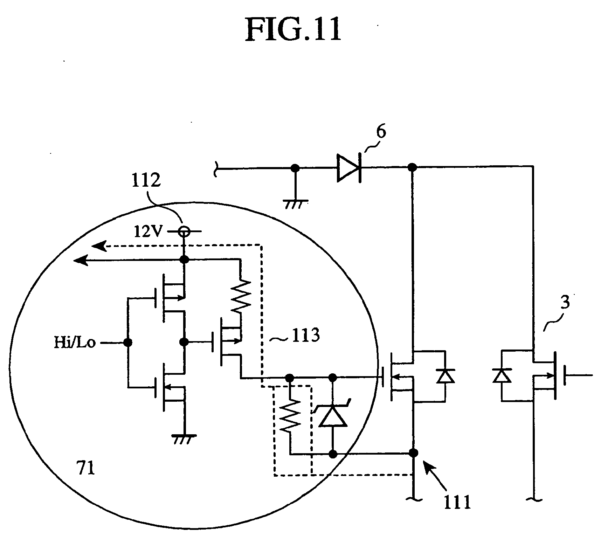

As for the circuit using the module IC as the inverter circuit, it can have the adverse effect on the driving circuit in the module IC if the battery side short-circuit voltage (battery voltage at the battery side short-circuit) is high because the withstand voltage of the driving circuit in the module IC is low as shown in Fig. 7. More specifically, if the source voltage of the FET exceeds the power supply voltage 112 of the module IC (12 V here) as shown in Fig. 11, that is, if the voltage at a point 111 of Fig. 11 exceeds the power supply voltage of 12 V, the cathode terminal becomes the power supply of the module IC, as well as of the circuits using the 12 V power supply within the lighting apparatus. Thus, a large current flows through the driver circuit 71 as indicated by the dotted line 113, and it can exceed the current capacity of the driver circuit 71. As a result, it canmelt the patterns in the worst case. Alternately, the power supply voltage beyond 12 V can exceed the withstand voltage of the transistors in the driver circuit 71, and impair the transistors.

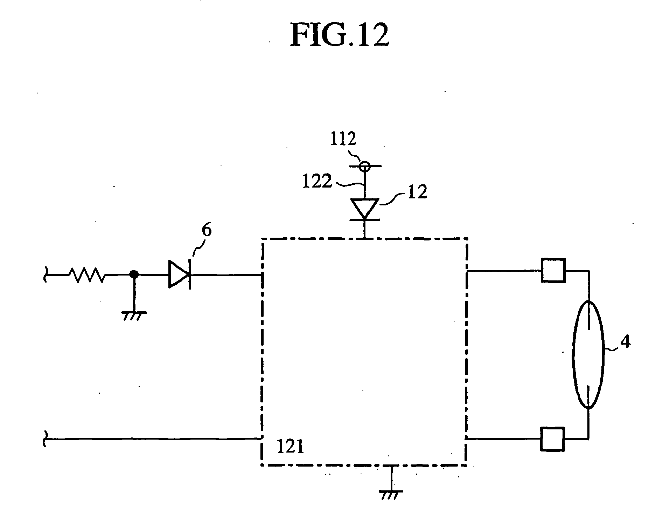

In view of this, a reverse current protection diode 12 is inserted into a power supply line 122 of the module IC 121 as shown in Fig. 12 to prevent the source voltage of the FET from becoming the power supply of the internal circuits. Thus, the damage of the driver circuit due to the excessive current beyond the capacity can be avoided.

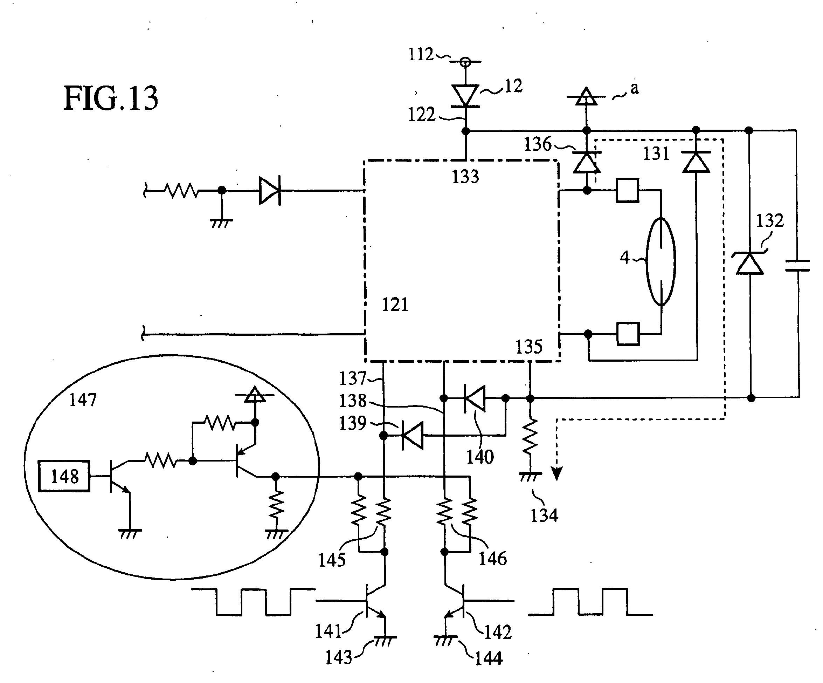

Furthermore, to circumvent the damage due to the voltage beyond the withstand voltage, the reference potential of the driver circuit is disconnected from the ground potential of the lighting apparatus as shown in Fig. 13 if the source voltage of the FET exceeds 12 V, to maintain the voltage applied to the driver circuit at a fixed value (12 V in this case), thereby preventing the damage of the driver circuit.

In Fig. 13, if a battery side short-circuit occurs at one of the output terminals (at the upper terminal, for example) of the lighting apparatus, a current flows through the path indicated by a dotted-line arrow 131 in Fig. 13. Accordingly, the voltage between a power supply terminal 133 and ground 134 of the module IC 121 is determined at a Zener voltage by a Zener diode 132. Thus, a ground terminal 135 of the module IC 121 is disconnected from the potential of the ground 134 of the lighting apparatus. Incidentally, a diode 136 encountered first on the path is depicted outside the module IC 121 to explain a parasitic diode in the module IC 121. In this way, even if a surge beyond the withstand voltage of the module IC 121 occurs, the module IC 121 does not suffer any impairment.

Two diodes 139 and 140 connected across the ground terminal 135 and driving signal lines 137 and 138 serve to match the low level of the driving signal lines 137 and 138 to the ground level of the module IC 121. In addition, current limiting resistors 145 and 146 are inserted to prevent large currents from flowing to circuit grounds 143 and 144 through the diodes 139 and 140 and transistors 141 and 142, when the ground terminal 135 of the module IC 121 is disconnected from the ground potential of the lighting apparatus.

Likewise, a high level generating circuit 147 is provided to match the high level of the driving signal lines 137 and 138 to the power supply level of the module IC 121. In the case where the lighting apparatus is inactive (when no voltage is supplied from the lighting line), the driving signal must be placed at a low level to turn off the inverter in its entirety. Thus, the circuit is configured such that it receives a reset signal 148 to place the driving signal at the low level when the reset level is low.

In this way, the inverter circuit can operate normally from the time the battery side short-circuit occurs to the time it detects the battery side short-circuit and halts the DC/DC converter.

### EMBODIMENT 9

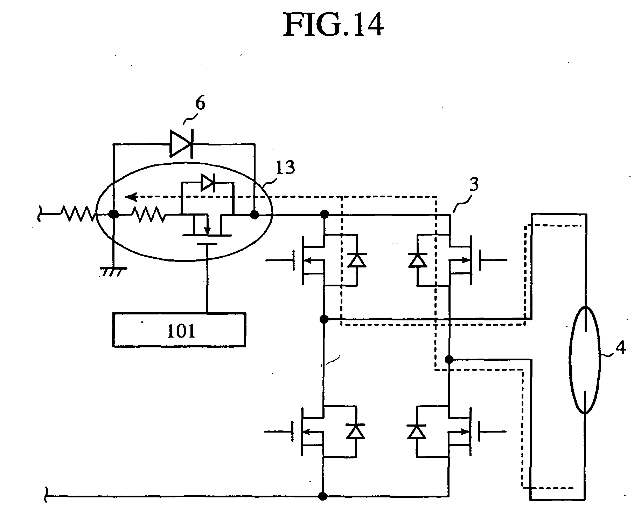

The present embodiment 9 includes a constant current circuit 13 connected in parallel with the reverse current protection diode 6 as shown in Fig. 14. Thus, it protects the circuit by limiting the current flowing from the battery side short-circuit position to the groundwhen the battery side short-circuit occurs, and by turning off the constant current circuit after detecting the battery side short-circuit.

### EMBODIMENT 10

The present embodiment 10 includes a Zener diode 14 connected in parallel with the reverse current protection diode 6. Thus it protects the module IC from damage by limiting the upper limit of a voltage applied to the module IC at the occurrence of a surge.

In this case, it is preferable that the Zener voltage be selected at a value lower than the lower limit of variations of the withstand voltage of the module IC, and the lower limit of the variations of the Zener voltage be selected at a value greater than the upper limit of the battery side short-circuit voltage. This makes it possible to prevent the lighting apparatus from being damaged by an excessive current due to a destruction of the Zener diode, which can result from a constant reverse current flowing through the Zener diode in the event of a battery side short-circuit with a voltage greater than the Zener voltage.

### EMBODIMENT 11

The present embodiment 11 includes a surge clamping circuit different from that of the foregoing embodiment 4 as shown in Fig. 8 in that it has a transistor 15 interposed between the diode 6 and diode 10 to disconnect the diode 6 from the power supply line of the lighting apparatus as needed.

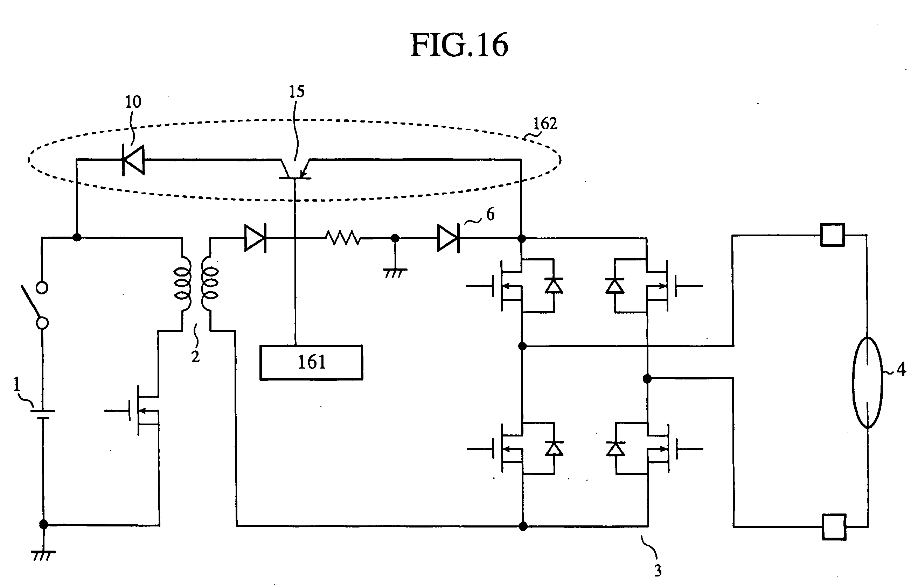

In Fig. 16, a driving circuit 161 supplies a low level signal to the base of the transistor 15 so that the transistor 15 is turned on as soon as the surge voltage occurs at the cathode of the diode 6, thereby being able to bypass the surge to the primary coil of the DC/DC converter 2 via the diode 10. To disconnect the diode 6 from the power supply line, the driving circuit 161 opens the base of the transistor 15 so that the transistor 15 cannot be turned on.

According to the circuit configuration of the foregoing embodiment 4 as shown in Fig. 8, even if the DC/DC converter is placed inactive in response to the detection of a battery side short-circuit, the battery side short-circuit position is connected to the primary side of the DC/DC converter via the diode 10. In this case, even when the power supply switch is turned off, since the battery side short-circuit position serves as a power supply for feeding a voltage to the internal circuits, the lighting apparatus maintains its operation.

In other words, even if the power supply switch is in an off-state, the lighting apparatus can start its operation in response to a battery side short-circuit of one of the output terminals of the lighting apparatus (such a condition is avoidable if the switch is inserted into the ground line).

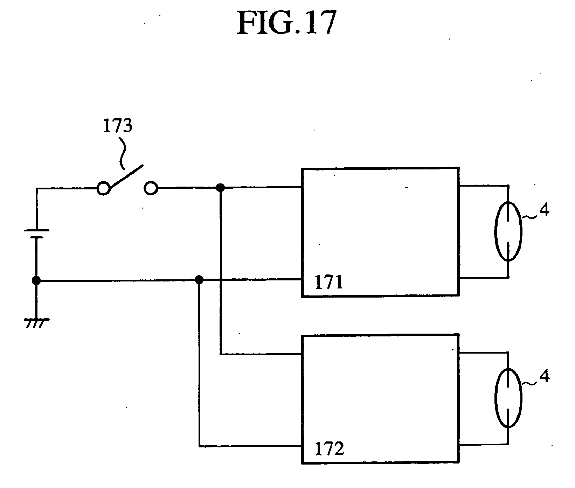

In contrast with this, the present embodiment is particularly effective for such a configuration as shown in Fig. 17, in which a single switch 173 inserted into a vehicle side power supply line turns on and off both right and left lighting apparatuses 171 and 172. (In contrast, it is difficult for the circuit of the embodiment 4 as shown in Fig. 8 to cope with the lighting apparatuses as shown in Fig. 17).

In addition, the embodiment 4 circuit as shown in Fig. 8 can cause a current to flow from the cathode of the diode 6 to the primary side of the DC/DC converter via the diode 10, even after halting the lighting operation of the discharge lamp by stopping the DC/DC converter. Thus, even when the single power supply switch as shown in Fig. 17 is turned off, the power can be supplied to the other lighting apparatus via the foregoing path, thereby being unable to extinguish the discharge lamp. Besides, this will cause a large current to flow through the diode 10, which can bring about a failure of the diode 10.

In contrast with this, the present embodiment is configured such that the transistor 15 can freely disconnect the current path from the battery side short-circuit position to the primary side of the DC/DC converter 2. Therefore it can prevent the battery side short-circuit position from becoming the power supply of the other lighting apparatus, thereby being able to prevent the failure of the diode 10.

As for the FETs of the inverter circuit in each of the foregoing embodiments, only the FETs on the current path from the battery side short-circuit position to the ground can be turned off, when the battery side short-circuit occurs.

Such a configuration makes it possible to protect the lighting apparatus from the battery side short-circuit, even when the driving circuit of the inverter circuit is composed of a pulse transformer as in the foregoing embodiments, and hence cannot turn off all the FETs at the same time.

The foregoing embodiments of the discharge lamp lighting apparatus each include the DC power supply; the voltage boosting circuit for boosting the DC voltage fed from the DC power supply; the inverter circuit for converting the DC boosted by the voltage booster to an AC; and a ground terminal, and installs the reverse current protection diode between the inverter circuit and the ground terminal. Thus, they can each prevent the failure of the components within the inverter circuit at the battery side short-circuit.

In addition, since they include the battery side short-circuit detector for detecting the battery side short-circuit by the cathode voltage of the reverse current protection diode, they can detect the battery side short-circuit positively.

Furthermore, since they include the capacitor for absorbing the surge voltage occurring at the reverse current protection diode, they can prevent the control circuit such as the control IC from being damaged by the battery side short-circuit.

Besides, since they include the surge clamping circuit against the surge voltage occurring at the reverse current protection diode, they can prevent the control circuit such as the control IC from being damaged by the battery side short-circuit.

Moreover, since they turn off the FETs in the inverter circuit at the battery side short-circuit, they can prevent the battery side short-circuit current from flowing from the opposite side of the reverse current protection diode.

In addition, since they include the constant current circuit connected in parallel with the reverse current protection diode, and turn off the constant current circuit in response to the detection of the battery side short-circuit, they can prevent the control circuit such as the control IC from being damaged by the battery side short-circuit.

Furthermore, since they includes a Zener diode connected in parallel with the reverse current protection diode, they can prevent the control circuit such as the control IC from being damaged by the battery side short-circuit.

Besides, since they include the DC power supply; the voltage boosting circuit for boosting the DC voltage fed from the DC power supply; the inverter circuit for converting the DC boosted by the voltage booster to an AC; and a ground terminal, and installs the reverse current protection FET between the inverter circuit and the ground terminal. Thus, they can each prevent the failure of the components within the inverter circuit at the battery side short-circuit.

Furthermore, since they include the reverse current protection diode in the power supply line to the control circuit for controlling the reverse current protection FET, they can prevent the control circuit such as the control IC from being damaged by the battery side short-circuit.

Moreover, since they disconnect the reference potential of the control circuit of the inverter circuit from the ground potential of the other circuit, they can prevent the control circuit such as the control IC from being damaged by the battery side short-circuit.

Finally, since they turn off only the FETs on the current path from the battery side short-circuit position to the ground in the inverter circuit, they can prevent the control circuit such as the control IC from being damaged by the battery side short-circuit.

### INDUSTRIAL APPLICABILITY

As described above, the present lighting apparatus of the discharge lamp is applicable to headlights of a motor vehicle, to luminaries of indoor/outdoor facilities, warehouses and factories or to streetlights.

## Claims

1. A discharge lamp lighting apparatus, comprising
- a boosting circuit (2) for receiving a DC power supply voltage from a battery (1) having one of its power supply terminals connected to ground, and for obtaining a boosted DC between output nodes of the boosting circuit (2) ;
- an inverter circuit (3) for inverting the DC boosted by said boosting circuit to an AC, the inverter circuit (3) being connected to receive at its input nodes the boosted DC from said boosting circuit (2);
- wherein a reverse current protection means (6) is inserted between an output node of said boosting circuit (2) and an input node of the inverter circuit (3) ;
**characterized in that**
- said output node of said boosting circuit (2) connected to said reverse current protection means (6) is connected to ground.

2. A discharge lamp lighting apparatus according to claim 1, wherein said reverse current protection means is a reverse current protection diode.

3. The discharge lamp lighting apparatus according to claim 2, further comprising a battery side short-circuit detector (7, 7a) for detecting a battery side short-circuit in response to a cathode voltage of said reverse current protection diode.

4. The discharge lamp lighting apparatus according to claim 2, further comprising a capacitor (9a or 9b) for absorbing a surge voltage occurring at said reverse current protection diode.

5. The discharge lamp lighting apparatus according to claim 2, further comprising a surge clamping circuit (10A) against a surge voltage occurring at said reverse current protection diode.

6. The discharge lamp lighting apparatus according to claim 2, further comprising a constant current circuit (13) connected in parallel with said reverse current protection diode, wherein said constant current circuit is turned off if a battery side short-circuit is detected.

7. The discharge lamp lighting apparatus according to claim 2, further comprising a Zener diode (14) connected in parallel with said reverse current protection diode.

8. A discharge lamp lighting apparatus according to claim 1, wherein said reverse current protection means is a reverse current protection FET.

9. The discharge lamp lighting apparatus according to claim 1 or 8, further comprising a reverse current protection diode (12) inserted into a power supply line (122) of a control circuit (121) of said inverter circuit.

10. The discharge lamp lighting apparatus according to claim 1 or 8, wherein a control circuit (121) of said inverter circuit is protected by disconnecting a reference potential of the control circuit of said inverter circuit from a ground potential of other circuits, if a surge voltage occurs at a cathode of a reverse current protection diode (12) when a battery side short-circuit occurs.

11. The discharge lamp lighting apparatus according to any preceding claim, wherein said inverter circuit (3) comprises four FETs connected in an H-like bridge.

12. The discharge lamp lighting apparatus according to claim 11, wherein said inverter circuit turns off at least its FETs that are placed on a current path from a battery side short-circuit position to a ground, if a battery side short-circuit occurs.

## Patentansprüche

1. Eine Entladungslampenbeleuchtungsvorrichtung, enthaltend
einen Aufladungsschaltkreis (2) zum Empfangen einer Gleichstromversorgungsspannung von einer Batterie (1), die eines ihrer Stromversorgungsanschlüsse geerdet hat, und zum Erhalten eines verstärkten Gleichstroms zwischen den Ausgabeknoten des Aufladungsschaltkreises (2);
einen Umsetzerschaltkreis (3) zum Umsetzen des verstärkten Gleichstroms durch den Aufladungsschalkreis in einen Wechselstrom, wobei der Umsetzerschaltkreis (3) verbunden ist, um an seinen Eingangsknoten den verstärkten Gleichstrom aus dem Aufladungsschaltkreis (2) zu empfangen;
worin ein Gegenstromschutzmittel (6) zwischen einem Ausgangsknoten des Aufladungsschaltkreises (2) und einem Eingabeknoten des Umsetzerschaltkreises (3) eingefügt ist;
**gekennzeichnet** darin, dass
der Ausgabeknoten des Aufladungsschaltkreises (2), der mit dem Gegenstromschutzmittel verbunden ist, geerdet ist.

2. Eine Entladungslampenbeleuchtungsvorrichtung entsprechend dem Anspruch 1, worin das Gegenstromschutzmittel eine Gegenstromschutzdiode ist.

3. Die Entladungslampenbeleuchtungsvorrichtung entsprechend dem Anspruch 2, weiterhin einen batterieseitigen Kurzschluss-Schaltkreisdetektor (7, 7a) zur Erkennung eines batterieseitigen Kurzschlussschaltkreises als Antwort auf eine Kathodenspannung der Gegenstromschutzdiode enthaltend.

4. Die Entladungslampenbeleuchtungsvorrichtung entsprechend dem Anspruch 2, weiterhin einen Kondensator (9a oder 9b) zur Absorption einer Stoßspannung enthaltend, auftauchend an der Gegenstromschutzdiode.

5. Die Entladungslampenbeleuchtungsvorrichtung entsprechend dem Anspruch 2, weiterhin einen Stoßaufspannungsschaltkreis (10A) gegen eine Stoßspannung enthaltend, auftauchend an der Gegenstromschutzdiode.

6. Die Entladungslampenbeleuchtungsvorrichtung entsprechend dem Anspruch 2, weiterhin eine Konstantstromschaltkreis (13) enthaltend, parallel zur Gegenstromschutzdiode verbunden, worin der der Konstantstromschaltkreis ausgeschaltet ist, wenn ein batterieseitiger Kurzschlussschaltkreis erkannt wird.

7. Die Entladungslampenbeleuchtungsvorrichtung entsprechend dem Anspruch 2, weiterhin eine Zenerdiode (14) enthaltend, parallel verbunden mit der Gegenstromschutzdiode.

8. Die Entladungslampenbeleuchtungsvorrichtung entsprechend dem Anspruch 1, worin das Gegenstromschutzmittel ein Gegenstromschutz FET ist.

9. Die Entladungslampenbeleuchtungsvorrichtung entsprechend dem Anspruch 1 oder 8, weiterhin ein Gegenstromschutzdiode (12) enthaltend, die in eine Stromversorgungsleitung (122) eines Kontrollschaltkreises (121) des Umsetzerschaltkreises eingefügt ist.

10. Die Entladungslampenbeleuchtungsvorrichtung entsprechend dem Anspruch 1 oder 8, worin ein Kontrollschaltkreis (121) des Umsetzerschaltkreises durch Trennen eines Referenzpotentials des Kontrollschaltkreises des Umsetzerschaltkreises vom Erdpotential anderer Schaltkreise geschützt wird, falls eine Stoßspannung an einer Kathode der Gegenstromschutzdiode (12) auftaucht, wenn ein batterieseitiger Kurzschlussschaltkreis auftaucht.

11. Die Entladungslampenbeleuchtungsvorrichtung entsprechend den vorhergehenden Ansprüchen, worin der Umsetzerschaltkreis (3) vier FETs enthält, verbunden in einer H artigen Brücke.

12. Die Entladungslampenbeleuchtungsvorrichtung entsprechend dem Anspruch 11, worin der Umsetzerschaltkreis zumindest seine FETs ausschaltet, die auf einem Strompfad von einer batterieseitigen Kurzschlussposition zu einer Erdung platziert sind, wenn ein batterieseitiger Kurzschlussschaltkreis auftaucht.

## Revendications

1. Dispositif d'éclairage à lampe à décharge, comprenant
- un circuit de survoltage (2) pour recevoir une tension d'alimentation continue depuis une batterie (1) ayant une de ses bornes d'alimentation reliée à la masse, et pour obtenir un courant continu survolté entre des noeuds de sortie du circuit de survoltage (2),
- un circuit onduleur (3) pour convertir le courant continu survolté par ledit circuit de survoltage en un courant alternatif, le circuit onduleur (3) étant relié pour recevoir au niveau de ses noeuds d'entrée le courant continu survolté depuis ledit circuit de survoltage (2),
- dans lequel des moyens de protection contre un courant inverse (6) sont insérés entre un noeud de sortie dudit circuit de survoltage (2) et un noeud d'entrée du circuit onduleur (3),
**caractérisé en ce que**
- ledit noeud de sortie dudit circuit de survoltage (2) relié auxdits moyens de protection contre un courant inverse (6) est relié à la masse.

2. Dispositif d'éclairage à lampe à décharge selon la revendication 1, dans lequel lesdits moyens de protection contre un courant inverse sont une diode de protection contre un courant inverse.

3. Dispositif d'éclairage à lampe à décharge selon la revendication 2, comprenant de plus un détecteur de court-circuit côté batterie (7, 7a) pour détecter un court-circuit côté batterie en réponse à une tension de cathode de ladite diode de protection contre un courant inverse.

4. Dispositif d'éclairage à lampe à décharge selon la revendication 2, comprenant de plus un condensateur (9a ou 9b) pour absorber une surtension transitoire apparaissant au niveau de ladite diode de protection contre un courant inverse.

5. Dispositif d'éclairage à lampe à décharge selon la revendication 2, comprenant de plus un circuit de fixation de niveau de surtension (10A) à l'encontre d'une surtension transitoire apparaissant au niveau de ladite diode de protection contre un courant inverse.

6. Dispositif d'éclairage à lampe à décharge selon la revendication 2, comprenant de plus un circuit à courant constant (13) connecté en parallèle à ladite diode de protection contre un courant inverse, dans lequel ledit circuit à courant constant est bloqué si un court-circuit côté batterie est détecté.

7. Dispositif d'éclairage à lampe à décharge selon la revendication 2, comprenant de plus une diode Zener (14) connectée en parallèle à ladite diode de protection contre un courant inverse.

8. Dispositif d'éclairage à lampe à décharge selon la revendication 1, dans lequel lesdits moyens de protection contre un courant inverse sont un transistor FET de protection contre un courant inverse.

9. Dispositif d'éclairage à lampe à décharge selon la revendication 1 ou 8, comprenant de plus une diode de protection contre un courant inverse (12) insérée dans une ligne d'alimentation (122) d'un circuit de commande (121) dudit circuit onduleur.

10. Dispositif d'éclairage à lampe à décharge selon la revendication 1 ou 8, dans lequel un circuit de commande (121) dudit circuit onduleur est protégé en déconnectant un potentiel de référence du circuit de commande dudit circuit onduleur à partir d'un potentiel de masse d'autres circuits, si une surtension transitoire apparaît au niveau d'une cathode d'une diode de protection contre un courant inverse (12) lorsqu'un court-circuit côté batterie apparaît.

11. Dispositif d'éclairage à lampe à décharge selon l'une quelconque des revendications précédentes, dans lequel ledit circuit onduleur (3) comporte quatre FET connectés sous forme d'un pont de type H.

12. Dispositif d'éclairage à lampe à décharge selon la revendication 11, dans lequel ledit circuit onduleur bloque au moins ses FET qui sont placés sur un trajet de courant depuis une position de court-circuit côté batterie jusqu'à la masse, si un court-circuit côté batterie apparaît.
